# EUROPÄISCHE PATENTANMELDUNG

(11) **EP 1 004 282 A2**
(43) Veröffentlichungstag der Anmeldung: **31.05.2000**
(21) Anmeldenummer: 99890368.6
(22) Anmeldetag: 19.11.1999
(51) Int. Cl.: A61C 17/34, A46B 9/04

(54) **Gerät für die Pflege von Zähnen, Zahnrestaurationsteilen und Zahnprothesen**

(30) Priorität: 24.11.1998 AT 196898
(71) Anmelder: Ertl, Christine, 9020 Klagenfurt (AT)
(72) Erfinder: Ertl, Christine, 9020 Klagenfurt (AT)
(74) Vertreter: Beer, Manfred, Dipl.-Ing.

(57) **Zusammenfassung**

Die üblichen Zahnbürsten, die in der Regel zusammen mit allenfalls Scheuermittel enthaltenden Zahnpflegemitteln (Zahnpasten) verwendet werden, sind aus verschiedenen Gründen nachteilig.

Erfindungsgemäß wird daher ein Putzkörper für die Pflege von Zähnen, Zahnrestaurationsteilen und Zahnprothesen vorgeschlagen, der dadurch gekennzeichnet ist, daß der Putzkörper aus Schaumstoff besteht.

Der vorteilhafte Effekt des erfindungsgemäßen Zahnputzkörpers ergibt sich dadurch, daß die Gefahr, daß die Zähne, Zahnrestaurationsteile oder das Zahnfleisch beschädigt wird, entfällt, und daß sich der Putzkörper den Zähnen bei seiner Verwendung optimal anpassen kann und so auch die Fissuren, die Approximalräume und der Sulcusbereich gut gereinigt werden können.

## Beschreibung

Die Erfindung betrifft ein Gerät für die Pflege von Zähnen, Zahnrestaurationsteilen und Zahnprothesen, wobei ein aus Schaumstoff bestehender Putzkörper an einem Aufsteckteil angeordnet ist, der mit einem Bewegungsgeber gekuppelt ist, der dem Putzkörper eine kreisförmig hin- und hergehende und/oder eine vibrierende Bewegung erteilt.

Das Reinigen von Zähnen (Zähneputzen) gewinnt zunehmend an Bedeutung, um trotz aggressiver Nahrung und trotz durch unkontrollierte Antibiotikazufuhr resistent und hochaktiv gewordener Bakterienpopulationen gesunde Zähne zu behalten.

Üblicherweise wird zum Zähneputzen eine Zahnbürste verwendet, die als Handzahnbürste mit Borsten oder als elektrische Zahnbürste ausgeführt sein kann.

Die üblichen Zahnbürsten, die in der Regel zusammen mit allenfalls Scheuermittel enthaltenden Zahnpflegemitteln (Zahnpasten) verwendet werden, sind aus verschiedenen Gründen nachteilig. Einmal zerstören sie bei Daueranwendung nicht nur den Zahnschmelz, sondern auch die in der Zahnrestauration oder -prothetik verwendeten Werkstoffe, wie Keramik und Gold. Nachteilig sind die üblichen Zahnbürste auch, weil bei der Zahnreinigung mit Zahnbürsten im Idealfall nur die Borstenspitzen aktiv werden. Der Rest der Borstenlänge dient nur dazu, den Borsten die erforderliche Elastizität zu geben. Lange Borsten aber haben den Nachteil, daß sie sich bei erhöhter Druckanwendung verbiegen, so daß nicht mehr (nur) die Borstenspitzen, sondern auch die Seiten der Borsten wirken und so eine (nur) ungenügende, nicht kontrollierbare und unter Umständen das Zahnfleisch beschädigende Wirkung eintritt. Nachteilig bei den bekannten, mit Borsten bestückten Zahnbürsten ist es auch, daß sich die Borsten bei längerem Gebrauch bleibend verbiegen und nicht mehr brauchbar sind.

Problematisch beim Putzen von Zähnen mit Zahnbürsten ist es auch, daß die Zähne Fissuren aufweisen, an welchen kugelige, glatte Flächen aneinander treffen. Diese Fissuren sind neben dem Approximalraum und den sulcusnahen Bereichen diejenigen Zahnteile, die einer besonders genauen und gründlichen Reinigung bedürfen, denn gerade diese Zahnteile sind mit Bürsten nicht hinreichend gründlich zu reinigen.

Es ist daher auch schon vorgeschlagen worden, zum Reinigen der Zähne, von Zahnrestaurationsteilen und von Zahnprothesen Putzkörper aus Schaumstoffen zu verwenden (vergleiche DE 196 07 742 A und US 5,283,924 A).

Zahnbürstenartige Geräte, die mit Schaumstoffteilen an Stelle der üblichen Borsten ausgerüstet sind, sind in der DE 197 08 875 C oder in der DE 36 21 815 A beschrieben.

Der Erfindung liegt die Aufgabe zu Grunde, ein Gerät der eingangs genannten und aus der DE 196 07 742 A bekannten Art vorzuschlagen, das an Stelle der bekannten Zahnbürsten verwendet werden kann.

Gelöst wird diese Aufgabe in einer ersten Ausführungsform mit einem Gerät mit den Merkmalen von Anspruch 1.

Alternative Ausführungsformen des Gerätes der Erfindung, weisen die Merkmale der unabhängigen Ansprüche 2, 3 oder 4 auf.

Die Putzkörper der Erfindung lösen die Aufgaben mit den Merkmalen der unabhängigen Ansprüche 11, 23 oder 25.

Bevorzugte und vorteilhafte Ausgestaltungen der Erfindung sind Gegenstand der Unteransprüche.

Dadurch, daß der erfindungsgemäße, zum Zähneputzen vorgeschlagene Putzkörper aus Schaumstoff mit einer der in den unabhängigen Ansprüchen genannten Formgebung besteht, ergeben sich beim Putzen von Zähnen erhebliche Vorteile.

Ein vorteilhafter Effekt des erfindungsgemäßen Putzkörpers ergibt sich dadurch, daß die Gefahr, daß die Zähne, Zahnrestaurationsteile oder das Zahnfleisch beschädigt wird, entfällt, und daß sich der Putzkörper den Zähnen optimal anpassen kann und so auch die Fissuren, die Approximalräume und der Sulcusbereich gut gereinigt werden können.

Der Werkstoff, aus dem der erfindungsgemäße Putzkörper besteht, ist an sich beliebig. Bevorzugt ist, wenn der Zahnputzkörper wenigstens einigen der nachstehend genannten Anforderungen entspricht:

Er muß ungiftig sein, er soll desinfizierbar sein, er soll nicht abfärben und formbeständig sein, wobei angestrebt ist, daß er im nassen Zustand nicht viel weicher als im trockenen Zustand, er soll nicht härter als Dentin sein und er darf nur so starr sein, daß Zahnfleischverletzungen vermieden werden.

Bevorzugt ist es, wenn der Schaumstoff offene Poren mit einer Porengröße von etwa 0,5 bis 1 mm aufweist.

Der erfindungsgemäße Putzkörper kann der wirksame Teil einer elektrischen Zahnreinigungsvorrichtung (ähnlich einer elektrischen Zahnbürste) sein. In diesem Fall ist es bevorzugt, wenn der rotierende und/oder vibrierende Putzkörper kegelförmig ausgebildet ist, wobei ein Kegelwinkel von etwa 60° bevorzugt ist. In einer Ausführungsform kann der Putzkörper eine Länge von etwa 15 mm und an seiner Basis einen Durchmesser von etwa 10 mm besitzen.

Das Reinigen des Putzkörpers kann in allen seinen Ausführungsformen einfach dadurch erfolgen, daß man ihn unter fließendem Wasser ausdrückt, um ihn von groben Verunreinigungen zu befreien. Zusätzlich kann der Putzkörper in einer keimtötenden Lösung gelagert werden.

Der erfindungsgemäße Putzkörper kann als Handgerät (ähnlich einer Handzahnbürste) ausgebildet sein, indem er an einem Griff, ähnlich jenem herkömmlicher Zahnbürsten montiert ist. Bevorzugt ist dabei, wenn der erfindungsgemäße Putzkörper rund um das in den Mund einzuführende Ende des Aufsteckteiles herum angeordnet ist. Aber auch Ausführungsformen mit nur einseitig angeordnetem Zahnputzkörper sind möglich.

Der erfindungsgemäße Putzkörper kann auch als Formkörper ausgebildet sein, der zum Putzen in den Mund genommen wird, wobei die Reinigung der Zähne durch Kauen auf dem als Formkörper ausgebildeten Zahnputzkörper ausgeführt wird. Insbesondere bei dieser Ausführungsform des erfindungsgemäßen Zahnputzkörpers kann dieser auch für nur einmaligen Gebrauch ausgelegt sein.

Wenn der erfindungsgemäße Putzkörper als Formkörper ausgebildet ist, der zum Reinigen der Zähne durch Kauen auf dem Formkörper verwendet wird, besteht die Möglichkeit, die Gestalt des Formkörpers an das Gebiß des Benützers individuell anzupassen. Dies kann dadurch erfolgen, aus einem Rohling der individuell angepaßte Putzkörper herausgeschnitten wird. Es besteht aber auch die Möglichkeit, den Putzkörper dadurch herzustellen, daß er in einer Negativform des Gebisses aufgeschäumt wird.

Des weiteren besteht die Möglichkeit, den durch Kauen zu benutzenden Putzkörper in einen Teil, der dem Oberkiefer und einen weiteren Teil, der dem Unterkiefer zugeordnet ist, zu unterteilen.

Weitere Einzelheiten, Merkmale und Vorteile der erfindungsgemäßen Geräte und Putzkörpers ergeben sich aus der nachstehenden Beschreibung bevorzugter Ausführungsbeispiele der Erfindung, in der auf die angeschlossenen Zeichnungen Bezug genommen wird.

Es zeigen:
Fig. 1 in Seitenansicht einen an einem Bewegungsgeber befestigten Putzkörper,
Fig. 2 und Fig. 3 Ausführungsformen mit hohlgekehltem Putzkörper,
Fig. 4 eine Ausführungsform mit halbzylinderförmigen Putzkörper,
Fig. 5 eine Ausführungsform einer Verbindung zwischen Putzkörper und Bewegungsgeber,
Fig. 6 eine andere Ausführungsform einer Verbindung zwischen Putzkörper und Bewegungsgeber,
Fig. 7 einen durch Kauen zu benützenden Putzkörper,
Fig. 8 bis 12 Querschnittsformen von durch Kauen zu benützenden Putzkörper von Fig. 7,
Fig. 13 bis 15 einen Putzkörper zum Pflegen von Prothesen und
Fig. 16 einen auf Finger aufschiebbaren Putzkörper.

Bei allen Ausführungsformen der Erfindung kann der Schaumstoff aus Polyurethan bestehen und offene Poren mit einer Porengröße von etwa 0,5 bis 1 mm besitzen, wobei eine Porengröße im Bereich von 0,5 mm bevorzugt ist. Polyurethan ist physiologisch unbedenklich, ist hinreichend formstabil, abriebbeständig und elastisch. Durch Auswahl entsprechender Raumgewichte könne spezifische, unterschiedliche Härtegrade des als Putzkörper dienenden Schaumstoffs gewählt werden.

Im Rahmen der Erfindung ist es möglich, Putzkörper unterschiedlicher Härte vorzusehen. Diese Putzkörper können beispielsweise in den Härtegraden "weich", "mittel" und "hart" ausgebildet sein. Der Härtegrad "weich" entspricht beispielsweise einem Raumgewicht von 50 kg/m³, der Härtegrad "mittel" einem Raumgewicht von 65 kg/m³ und der Härtegrad "hart" einem Raumgewicht von 80 kg/m³, für PolyurethanSchaumstoff.

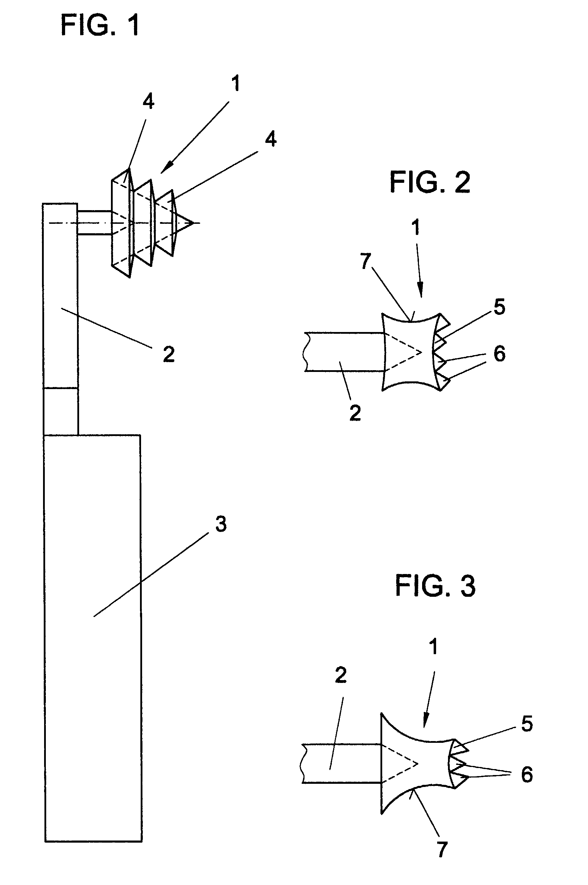

In der in den Fig. 1 gezeigten Ausführungsform ist der erfindungsgemäß als Schaumstoff ausgebildete Putzkörper 1 an einem Aufsteckteil 2 befestigt. Der Aufsteckteil 2 ist mit einem Bewegungsgeber 3 gekuppelt.

Es ist darauf hinzuweisen, daß in allen Figuren der Bewegungsgeber 3 nur schematisch angedeutet ist und eine beliebige Form besitzen kann, die den an ihn gestellten Anforderungen gerecht wird. Besonders vorteilhaft ist es, wenn der Bewegungsgeber 2 eine ergonomisch günstige Form besitzt, da er als Griff zum Halten des Gerätes bei dessen Verwendung dient.

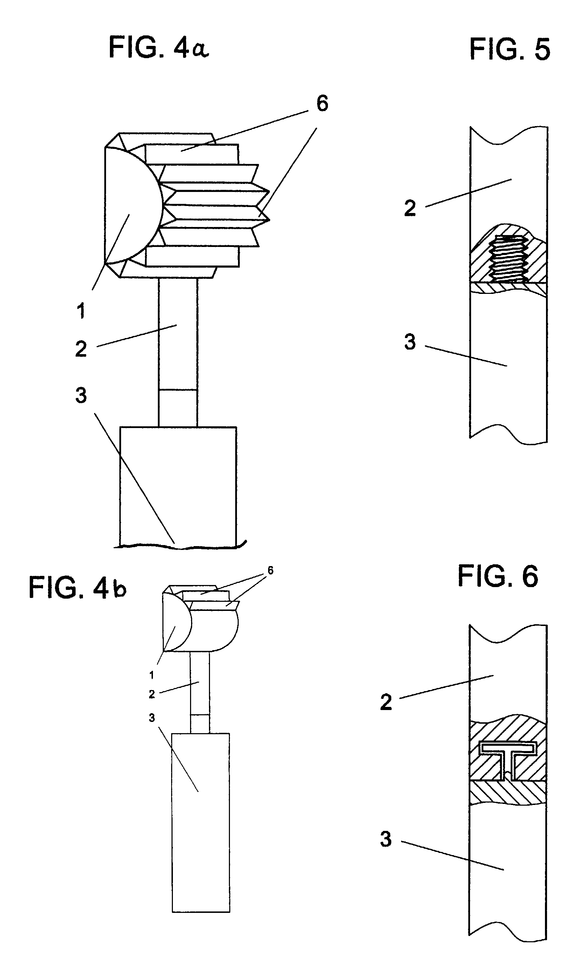

Bei dem in Fig. 1 gezeigten Ausführungsbeispiel ist der Putzkörper 1 ein Kegel aus Schaumstoff, insbesondere dem oben näher beschriebenen Polyurethanschaum. Der kegelförmige Putzkörper 1 ist rings um den Aufsteckteil 2 herum angeordnet, so daß er rundum zum Pflegen und Reinigen der Zähne und des Zahnfleisches wirksam ist. Der kegelförmige Putzkörper 1 ist gezahnt ausgebildet und weist Zähne 4 auf, die als von der in Fig. 5 strichliert angedeuteten Kegelfläche des Putzkörpers 1 ringsherum abstehen und beispielsweise als Ringrippen ausgebildet sind.

Bei der in den Fig. 2 und 3 gezeigten Ausführungsform ist die freie Endfläche 5 des Putzkörpers 1 konkav gewölbt, so daß der Putzkörper 1 eine hohlgekehlte Wirkfläche besitzt. Die Mantelfläche 7 des Putzkörpers 1 von Fig. 2 ist entsprechend einem Zylindermantel der sich von seinen Enden zur Mitte hin verjüngt, also hohlgekehlt ist, ausgebildet.

Auch bei der Ausführungsform von Fig. 3 ist die Mantelfläche 7 des Putzkörpers 1 hohlgekehlt, insgesamt aber entsprechend einem Kegelstumpfmantel ausgebildet. Die Endfläche 5 des Putzkörpers 1 von Fig. 3 ist konkav geformt.

Bei der in den Fig. 2 und 3 gezeigten Ausführungsform ist der an dem Aufsteckteil 2 befestigte Putzkörper 1 an seiner vom Aufsteckteil 2 abgekehrten Endfläche mit Zähnen 6 ausgebildet, wobei die Zähne 6 im gezeigten Ausführungsbeispiel abgerundete freie Ränder oder Spitzen aufweisen und beispielsweise zur Achse des Putzkörpers 1 konzentrische, ringförmige Rippen sind.

Wie in Fig. 1 gezeigt, ist der Aufsteckteil 2 mit dem Bewegungsgeber 3 über den er mit der Hand gehalten wird, verbunden. Die Verbindung zwischen dem Aufsteckteil 2 und dem Bewegungsgeber 3 kann beliebig ausgeführt sein. Beispielsweise kann, wie in Fig. 6 gezeigt, eine Bajonettverbindung, oder wie in Fig. 5 gezeigt, eine Schraubverbindung vorgesehen sein. Diese Ausführungsform erlaubt es, zu ersetzende Putzkörper 1 leicht auszutauschen, oder aber wahlweise einen der jeweiligen Putzaufgabe entsprechenden Putzkörper 1 an ein- und demselben Bewegungsgeber 3 zu befestigen.

Die Fig. 1 zeigt eine Ausführungsform, bei welcher der Aufsteckteil 2 abgewinkelt ist. Dabei kann der Aufsteckteil um 45° oder um 90° (Fig. 1) abgewinkelt sein.

Durch den Bewegungsgeber 3, wird auf den Putzkörper 1 wie bei herkömmlichen "elektrischen" eine kreisförmige, hin- und hergehende und/oder vibrierende Bewegung übertragen.

Bei der in Fig. 4 gezeigten Ausführungsform ist über den Aufsteckteil 2 an einem Bewegungsgeber 3 ein annähernd halbzylinderförmig geformter Putzkörper 1 befestigt. Die gebogene Fläche des Putzkörpers 1 ist bei der in Fig. 4 gezeigten Ausführungsform der Zahnbogenform angenähert gekrümmt. Die gebogene Fläche kann glatt oder, wie in Fig. 4a und 4b gezeigt, ganz oder teilweise mit Zähnen 6 versehen sein.

Auch bei der in den Fig. 1 bis 3 gezeigten Ausführungsform kann der Aufsteckteil 2, so wie in Fig. 4 gezeigt, gerade sein. Der Putzkörper 1 von Fig. 4 kann auch an einem gewinkelten Aufsteckteil 2 vorgesehen sein.

Ein Putzkörper 1 aus Schaumstoff erlaubt bei den Ausführungsformen der Fig. 1 bis 6 Geräte, die mit wesentlich geringeren Putzbewegungsamplituden ein hervorragendes Putzergebnis erreichen. Deshalb ist oft schon eine Vibrationsbewegung des Putzkörpers 1 ausreichend.

Die Vollrotation des Putzkörpers 1 bei der Ausführungsform der Fig. 1 erzeugt eine perfekte Wischbewegung, die von Zähnen sämtliche Verschmutzungen entfernen kann. Die Form des Putzkörpers 1 von Fig 1 bis 3 ermöglicht das Reinigen des Interdentalraumes. Die wechselnde Drehrichtung in Verbindung mit der ständigen Änderung des Winkels gewährleistet eine vollständige Reinigung. Die Reinigungsbewegung kann auch mit Druck ausgeführt werden, um fest an Zähnen anhaftende Beläge zu entfernen.

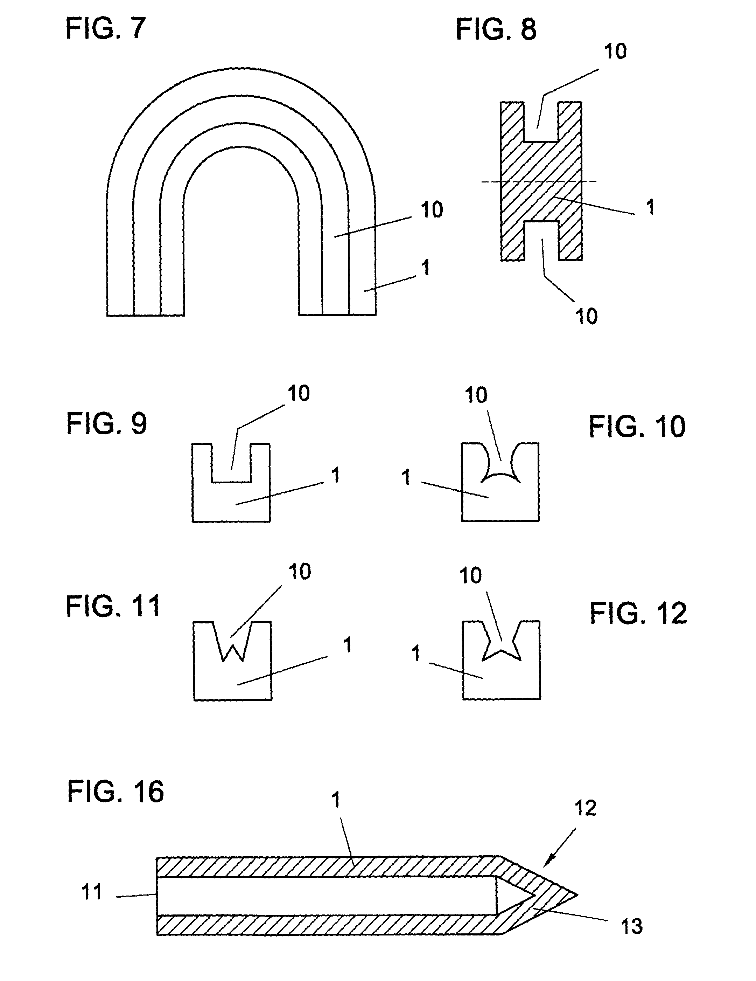

Fig. 7 ist ein dem Zahnbogen angepaßter Putzkörper 1 in Draufsicht gezeigt, der zum Putzen der Zähne in den Mund genommen wird, und dann zur Zahn- und Zahnfleischpflege auf dem Putzkörper 1 Kaubewegungen ausgeübt werden. Fig. 8 zeigt eine Querschnittsform des Kau-Putzkörpers 1, wobei die Nuten an der Oberseite und/oder an der Unterseite den Zähnen zugekehrt ausgebildet sind. Der Putzkörper 1 der Fig. 7 kann aus zwei in der in Fig. 8 strichliert eingezeichneten Ebene aneinander anliegenden Teilen bestehen. Diese Teile können dem Oberkiefer und dem Unterkiefer angepaßt geformt sein. Die Teile des Putzkörpers sind in der Regel miteinander verbunden.

Andere Querschnittsformen der Nuten 10 für Putzkörper 1 gemäß Fig. 7, auf dem gekaut wird, zeigen die Fig. 9 bis 12. Dabei zeigt Fig. 9 eine Nut 10 mit rechteckiger Querschnittsform, Fig. 11 eine Nut 10 mit mehrfach gewinkelter Querschnittsform mit winkelig vorspringendem Nutboden, Fig. 10 eine Ausführungsform mit konvex gewölbten Nutwänden und Nutboden, und Fig. 12 eine Ausführungsform, bei welcher die Nutwände und auch der Nutboden nach innen vorspringend gewinkelt sind. Der kauaktive Putzkörper 1 der Ausführungsform gemäß Fig. 7 bis 12 ist der Form der Zahnbögen angepaßt. Die Profile der Nuten 10 ermöglichen eine kombinierte Wisch-Putz-Wirkung durch den normalen Kauvorgang. Die unterschiedlich profilierten Nuten erlauben die indikationsspezifische Auswahl der Putzwirkung.

Fig. 16 zeigt eine Ausführungsform des erfindungsgemäß Putzkörpers 1, der ähnlich einem Fingerling, über einen Finger gesteckt werden kann und so ohne Griffteil zum Pflegen und Putzen der Zähne und des Zahnfleisches verwendet werden kann. Der Putzkörper 1 der Fig. 16 ist als an einem Ende offener Hohlzylinder ausgebildet, der an seinem dem offenen Ende 11 gegenüberliegenden Ende 12 mit einer kegelförmigen Spitze 13 ausgebildet ist. Die Außenfläche der kegelförmigen Spitze 13 kann, wie in Fig. 16 gezeigt, glatt sein oder eine Ausgestaltung besitzen, wie sie beispielsweise in den Fig. 1 gezeigt ist. Das dem offenen Ende gegenüberliegende Ende des Putzkörpers 1 der Fig. 16 kann auch anders als kegelig ausgebildet sein und beispielsweise eine halbkugelförmige Gestalt besitzen, oder eine Form besitzen, die jener der Putzkörper 1 der Fig. 2 oder 3 entspricht oder ähnlich ist. Ein vielseitiges "Werkzeug" von Menschen sind dessen Finger. Es gelingt im Normalfall jedem, mit einem Finger problemlos jede Stelle in der Mundhöhle zu erreichen. Als Einwegputzgerät ist der Finger-Putzkörper 1 gemäß Fig. 16 einfach zu transportieren, hygienisch und ergibt ein hervorragendes Putzergebnis.

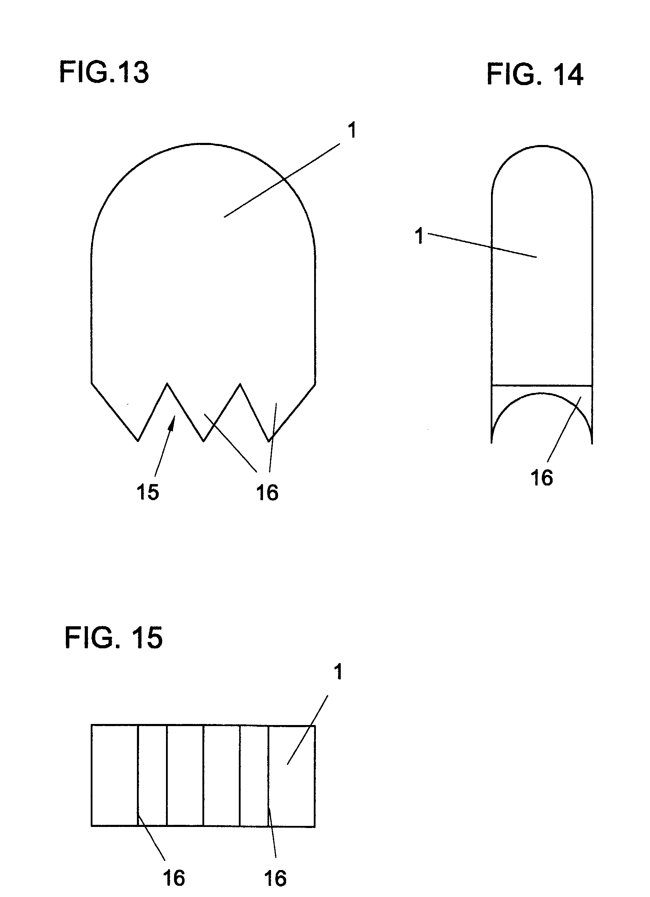

Der erfindungsgemäße Putzkörper 1 aus Schaumstoff kann in einer Ausführungsform auch zum Reinigen und Pflegen von Prothesen verwendet werden. Eine hiefür geeignete Ausführungsform zeigen die Fig. 13 bis 15. Das beim Putzen wirksame Ende 15 des Putzkörpers 1 ist, wie in Fig. 13 gezeigt, gezahnt ausgebildet, wobei die Zähne 16 hohlgekehlt sein können, wie Fig. 14 zeigt. Der Umstand, daß der Prothesen-Putzkörper 1 aus offenporigem Schaumstoff besteht, eröffnet die Möglichkeit, in ihm einen Kern mit Prothesenreinigungsmittel unterzubringen.

Zusammenfassend kann ein bevorzugtes Ausführungsbeispiel der Erfindung wie folgt beschrieben werden:

Die üblichen Zahnbürsten, die in der Regel zusammen mit allenfalls Scheuermittel enthaltenden Zahnpflegemitteln (Zahnpasten) verwendet werden, sind aus verschiedenen Gründen nachteilig.

Erfindungsgemäß wird daher ein Putzkörper für die Pflege von Zähnen, Zahnrestaurationsteilen und Zahnprothesen vorgeschlagen, der dadurch gekennzeichnet ist, daß der Putzkörper aus Schaumstoff besteht.

Der vorteilhafte Effekt des erfindungsgemäßen Zahnputzkörpers ergibt sich dadurch, daß die Gefahr, daß die Zähne, Zahnrestaurationsteile oder das Zahnfleisch beschädigt wird, entfällt, und daß sich der Putzkörper den Zähnen bei seiner Verwendung optimal anpassen kann und so auch die Fissuren, die Approximalräume und der Sulcusbereich gut gereinigt werden können.

## Patentansprüche

1. Gerät für die Pflege von Zähnen, Zahnrestaurationsteilen und Zahnprothesen, wobei ein aus Schaumstoff bestehender Putzkörper (1) an einem Aufsteckteil (2) angeordnet ist, der mit einem Bewegungsgeber (3) gekuppelt ist, der dem Putzkörper (1) eine kreisförmig hin- und hergehende und/oder eine vibrierende Bewegung erteilt, dadurch gekennzeichnet, daß der Putzkörper (1) um ein Ende des Aufsteckteils (2) herum angeordnet und kegelförmig ausgebildet ist, und daß die Kegelfläche des Putzkörpers (1) gezahnt ist (Fig. 1).

2. Gerät für die Pflege von Zähnen, Zahnrestaurationsteilen und Zahnprothesen, wobei ein aus Schaumstoff bestehender Putzkörper (1) an einem Aufsteckteil (2) angeordnet ist, der mit einem Bewegungsgeber (3) gekuppelt ist, der dem Putzkörper (1) eine kreisförmig hin- und hergehende und/oder eine vibrierende Bewegung erteilt, dadurch gekennzeichnet, daß der Putzkörper (1) um ein Ende des Aufsteckteils (2) herum angeordnet ist und daß der Putzkörper (1) im wesentlichen zylinderförmig mit konkav ausgebildeter Zylindermantelfläche und mit konkav ausgebildeter, dem Aufsteckteil (2) gegenüberliegender Endfläche ausgebildet ist (Fig. 2).

3. Gerät für die Pflege von Zähnen, Zahnrestaurationsteilen und Zahnprothesen, wobei ein aus Schaumstoff bestehender Putzkörper (1) an einem Aufsteckteil (2) angeordnet ist, der mit einem Bewegungsgeber (3) gekuppelt ist, der dem Putzkörper eine kreisförmig hin- und hergehende und/oder eine vibrierende Bewegung erteilt, dadurch gekennzeichnet, daß der Putzkörper (1) um ein Ende des Aufsteckteils (2) herum angeordnet ist und daß der Putzkörper (1) im wesentlichen kegelstumpfförmig ausgebildet ist, und daß die Kegelstumpfmantelfläche und die dem Aufsteckteil (2) gegenüberliegende Endfläche des Putzkörpers (1) konkav ausgebildet sind (Fig. 3).

4. Gerät für die Pflege von Zähnen, Zahnrestaurationsteilen und Zahnprothesen, wobei ein aus Schaumstoff bestehender Putzkörper (1) an einem Aufsteckteil (2) angeordnet ist, der mit einem Bewegungsgeber (3) gekuppelt ist, der dem Putzkörper (1) eine kreisförmig hin- und hergehende und/oder eine vibrierende Bewegung erteilt, dadurch gekennzeichnet, daß der Putzkörper (1) um ein Ende des Aufsteckteils (2) herum angeordnet ist und daß der Putzkörper (1) als halbzylinderförmiger Formteil ausgebildet ist, dessen gewölbte Fläche der Zahnbogenform angenähert ist, und daß der Aufsteckteil (2) von der Zylindermantelfläche des Putzkörpers ausgeht (Fig. 4).

5. Gerät nach einem der Ansprüche 2 bis 4, dadurch gekennzeichnet, daß die Außenfläche des Putzkörpers (1) gezahnt ist.

6. Gerät nach einem der Ansprüche 2 bis 5, dadurch gekennzeichnet, daß der Putzkörper (1) an seiner vom Bewegungsgeber (3) abgekehrten Fläche gezahnt ist.

7. Gerät nach einem der Ansprüche 1 bis 6, dadurch gekennzeichnet, daß die Zähne quer zur Längserstreckung des Putzkörpers (1) ausgerichtete Rippen sind.

8. Gerät nach einem der Ansprüche 1 bis 7, dadurch gekennzeichnet, daß die Zähne abgerundete Spitzen aufweisen.

9. Gerät nach einem der Ansprüche 1 bis 8, dadurch gekennzeichnet, daß der Aufsteckteil (2) geteilt ist und daß die Verbindung zwischen den Teilen des Aufsteckteils (2) eine Bajonettverbindung ist (Fig. 6).

10. Gerät nach einem der Ansprüche 1 bis 8, dadurch gekennzeichnet, daß der Aufsteckteil (2) geteilt ist und daß die Verbindung zwischen den Teilen des Aufsteckteils (2) eine Schraubverbindung ist (Fig. 5).

11. Putzkörper für die Pflege von Zähnen, Zahnrestaurationsteilen und Zahnprothesen, wobei der Putzkörper (1) aus Schaumstoff besteht, dadurch gekennzeichnet, daß der Putzkörper (1) als annähernd U-förmig gebogener Formkörper ausgebildet ist, dessen Form dem Zahnbogen angepaßt ist (Fig. 7).

12. Putzkörper nach Anspruch 11, dadurch gekennzeichnet, daß an wenigstens einer Seite des Putzkörpers (1) eine Nut (10) vorgesehen ist.

13. Putzkörper nach Anspruch 12, dadurch gekennzeichnet, daß die Nut (10) eine rechteckige Querschnittsform besitzt (Fig. 8, 9) .

14. Putzkörper nach Anspruch 12, dadurch gekennzeichnet, daß die Nut (10) sich zum Nutenboden hin verjüngt (Fig. 11).

15. Putzkörper nach Anspruch 12, dadurch gekennzeichnet, daß die Nut (10) von ebenen Nutwänden begrenzt ist (Fig. 8, 9, 11).

16. Putzkörper nach Anspruch 12, dadurch gekennzeichnet, daß die Nut (10) einen ebenen Nutboden besitzt (Fig. 8, 9).

17. Putzkörper nach Anspruch 12, dadurch gekennzeichnet, daß die Nut (10) einen nach innen vorspringenden Nutboden besitzt (Fig. 10, 11, 12).

18. Putzkörper nach Anspruch 12, dadurch gekennzeichnet, daß der Nutboden gewinkelt ist (Fig. 11, 12).

19. Putzkörper nach Anspruch 12, dadurch gekennzeichnet, daß der Nutboden konvex gewölbt ist (Fig. 10).

20. Putzkörper nach Anspruch 12, dadurch gekennzeichnet, daß die Nutwände innen vorspringend ausgebildet sind (Fig. 10, 12).

21. Putzkörper nach Anspruch 12, dadurch gekennzeichnet, daß die Nutwände konvex gewölbt sind (Fig. 10).

22. Putzkörper nach Anspruch 12, dadurch gekennzeichnet, daß die Nutwände gewinkelt sind (Fig. 12).

23. Putzkörper für die Pflege von Zähnen, Zahnrestaurationsteilen und Zahnprothesen, wobei der Putzkörper (1) aus Schaumstoff besteht, dadurch gekennzeichnet, daß der Putzkörper (1) als Hohlzylinder ausgebildet ist, von dem ein Ende (11) für die Aufnahme eines Fingers offen und dessen anderes (12) Ende geschlossen ist (Fig. 16).

24. Putzkörper nach Anspruch 23, dadurch gekennzeichnet, daß das geschlossene Ende (12) des Putzkörpers kegelförmig (13) ausgebildet ist.

25. Putzkörper für die Pflege von Zähnen, Zahnrestaurationsteilen und Zahnprothesen, wobei der Putzkörper (1) aus Schaumstoff besteht, dadurch gekennzeichnet, daß der Putzkörper (1) als Putzkörper (1) für die Pflege von Prothesen ausgebildet ist und an einem Ende gezahnt (16) ist (Fig. 13, 14, 15).

26. Putzkörper nach Anspruch 25, dadurch gekennzeichnet, daß die Zähne (16) als quer zur Flächenerstreckung des Putzkörpers ausgebildete Rippen sind.

27. Putzkörper nach Anspruch 25 oder 26, dadurch gekennzeichnet, daß die Schneiden der Zähne (16) konkav gekrümmt sind (Fig. 14).

28. Putzkörper nach einem der Ansprüche 1 bis 27, dadurch gekennzeichnet, daß der Schaumstoff ein offenporiger Schaumstoff ist.

29. Putzkörper nach Anspruch 28, dadurch gekennzeichnet, daß die Poren des Schaumstoffs eine Größe von etwa 0,5 bis 1 mm, vorzugsweise 0,5 mm, haben.

30. Putzkörper nach Anspruch 27 oder 28, dadurch gekennzeichnet, daß der Schaumstoff ein Polyurethanschaumstoff ist.

31. Putzkörper nach Anspruch 27 oder 28, dadurch gekennzeichnet, daß der Schaumstoff ein Raumgewicht von 50 kg/m³ hat.

32. Putzkörper nach Anspruch 27 oder 28, dadurch gekennzeichnet, daß der Schaumstoff ein Raumgewicht von 65 kg/m³ hat.

33. Putzkörper nach Anspruch 27 oder 28, dadurch gekennzeichnet, daß der Schaumstoff ein Raumgewicht von 80 kg/m³ hat.
